(19) Europäisches Patentamt

European Patent Office

Office européen des brevets

(11) Veröffentlichungsnummer: **0 061 078**
**B1**

(12) **EUROPÄISCHE PATENTSCHRIFT**

(45) Veröffentlichungstag der Patentschrift:
13.11.85

(21) Anmeldenummer: 82101955.1

(22) Anmeldetag: 11.03.82

(51) Int. Cl.⁴: **G 21 D 1/02**, G 21 C 17/00

(54) Selbstfahrender Rohrinnenmanipulator zum fernbedienten Transportieren von Prüfgeräten und Werkzeugen längs vorgegebener Vorschubbahnen, vorzugsweise für Kernkraftanlagen.

(30) Priorität: 25.03.81 DE 3111814

(43) Veröffentlichungstag der Anmeldung:
29.09.82 Patentblatt 82/39

(45) Bekanntmachung des Hinweises auf die Patenterteilung:
13.11.85 Patentblatt 85/46

(84) Benannte Vertragsstaaten:
AT BE CH FR GB IT LI LU NL SE

(56) Entgegenhaltungen:
DE - A - 2 457 670
DE - A - 2 640 055
DE - A - 2 807 232
FR - A - 1 508 238
GB - A - 2 000 301
US - A - 3 898 741

ATOMNAJA ENERGIJA, Band 42, Nr. 1, 1977, Seiten 34-40, Moskau (SU); BORODSKY et al.: "In-service inspection of maerials in nuclear reactors"
NUCLEAR ENGINEERING INTERNATIONAL, Band 21, Nr. 249, 1976, Seiten 68-71, London (GB); PNC: "Inspection approach for future reactors"

(73) Patentinhaber: KRAFTWERK UNION AKTIENGESELLSCHAFT, Wiesenstrasse 35, D-4330 Mülheim (Ruhr) (DE)

(72) Erfinder: Weber, Robert, Esperstrasse 23, D-8521 Uttenreuth (DE)
Erfinder: Köppl, Alois, Untere Vorstadt 20, D-8802 Wolframs-Eschenbach (DE)
Erfinder: Förner, Siegfried, Leipziger Strasse 69, D-8520 Erlangen (DE)
Erfinder: Kohlert, Erich, Tetzelweg 38, D-8520 Erlangen (DE)
Erfinder: Müller, Otto, Dipl.-Ing., Eichenring 2, D-8521 Effeltrich (DE)

(74) Vertreter: Mehl, Ernst, Dipl.-Ing. et al, Postfach 22 01 76, D-8000 München 22 (DE)

## Beschreibung

Die Erfindung liegt auf dem Gebiet der Service-Technik für Rohranlagen und ist bei der konstruktiven Ausgestaltung eines Manipulators anzuwenden mit dem ein Werkzeug und/oder ein Prüfgerät in ein Rohr oder eine Rohrleitung eingebracht und dort für spezielle Arbeits- und/oder Prüfzwecke fernbedient eingesetzt werden soll. Derartige Rohrmanipulatoren sind von besonderer Bedeutung für die Untersuchung und Behandlung von Rohrleitungen in Kernkraftanlagen. Hier besteht insbesondere das Bedürfnis, Rundnähte oder Längsnähte von innen nachzuschleifen oder nachzuschweißen, mit Fernsehkameras oder mit Ultraschall-Prüfgerägten zu untersuchen usw. Es kommt dabei insbesondere auf die Einhaltung präziser Vorschub, Prüf- und Bearbeitungsbahnen an.

Ein bekannter selbstfahrender Manipulator besteht aus einem zweigliedrigen Schreitwert mit einem vorderen und einem hinteren Schreitkörper, wobei die beiden Schreitkörper über ein kardanartiges Gelenk miteinander verbunden sind und mit Antriebsmitteln zur rohraxialen Fortbewegung des einen Schreitkörpers relativ zum anderen Schreitkörper versehen sind. Diese Antriebsmittel bestehen aus einem Zylinder mit Hubkolben, die beide einen wesentlichen Teil des vorderen Schreitkörpers bilden. Am vorderen Ende dieses Schreitkörpers befindet sich eine Halterung für einen sich axial nach vorn erstreckenden Manipulatorkopf, der das eigentliche Werkzeug und/oder Prüfgerät trägt. — Der vordere Schreitkörper weist weiterhin am vorderen Ende des Hubzylinders sowie am hinteren Ende des nach hinten ausfahrbaren Hubkolbens ein Stützteil auf, das am Umfang verteilt Führungselemente in Form von Rollen zur Fortbewegung des Manipulators trägt. Ein gleichartiges Stützteil ist am hinteren Ende des hinteren Schreitkörpers vorgesehen, an den auch die Versorgungsleitungen herangeführt sind. — Beim Betrieb dieses Manipulators wird abwechselnd der eine und der andere Schreitkörper im Rohr oder in der Rohrleitung fixiert. Hierzu sind Klemmvorrichtungen in Form eines membranartig radial aufweitbaren zylindrischen Mantels vorgesehen, von denen je eine jedem Schreitkörper zwischen den Stützteilen zugeordnet ist (FR-A-1 508 238). Dieser bekannte Rohrmanipulator ist vor allem aufgrund der konstruktiven Ausgestaltung der Klemmvorrichtungen ein relativ langgestrecktes, schlankes Gebilde und daher nur im wesentlichen in geradlinig verlaufenden Rohrleitungen einsetzbar.

Ein anderer bekannter selbstfahrender Rohrmanipulator, der dem Transport eines Aufnehmers für ein Fehlersuchgerät dient, besteht aus einem dreigliedrigen Schreitwerk mit einem zwischen zwei Stützkörpern angeordneten, faltenbalgartigen Antriebseinrichtung. Die beiden Stützkörper sind mit je einem membranartig radial aufweitbaren, zylindrischen Mantel versehen, und das faltenbalgartige Zwischenstück ist mit Unter- oder Überdruck beaufschlagbar (GB-A-2 000 301). Ein solcher Manipulator kann auch Rohrkrümmungen durchlaufen, doch dürfte er zum Transport von schweren Werkzeugen wie Schleif- oder Schweißvorrichtungen nicht geeignet sein, insbesondere dann nicht, wenn bei dem Transport Höhendifferenzen zu überwinden sind.

Ausgehend von einem selbstfahrenden Manipulator mit den Merkmalen des Oberbegriffes des Anspruches 1 (FR-A-1 508 238) liegt der Erfindung die Aufgabe zugrunde, das zweigliedrige Schreitwerk so auszugestalten, daß mit dem Rohrmanipulator auch gekrümmte und senkrecht verlaufende Rohrpartien durchfahren werden können, ohne daß die Gefahr des Durchrutschens oder der Positionsveränderung bestünde.

Zur Lösung dieser Aufgabe ist gemäß der Erfindung vorgesehen,
daß die Stützteile der Schreitkörper als Stützfläche ausgebildet sind, die außer den Führungselementen auch die Klemmvorrichtungen tragen, welche über die Kontur der Stützflansche hervorragen,
daß bei dem mit zwei Stützflanschen versehenen Schreitkörper die beiden Stützflansche starr miteinander verbunden sind, daß die Klemmvorrichtungen aus zweiseitig beaufschlagbaren, strahlen- oder speichenförmig um das Zentrum des jeweiligen Stützflansches herum angeordneten und an diesem befestigten Klemmkolben-Zylinder-Anordnung bestehen, deren nach außen durch eine Zylinder-Stirnwand ragende Kolbenstangen ballige Klemmflächen aufweisen,
und daß der die Antriebsmittel aufnehmende Schreitkörper den hinteren Schreitkörper bildet, wobei die Versorgungsleitungen in Form eines flexiblen Stranges an diesen Schreitkörper herangeführt sind und der Manipulatorkopf an einem Stützflansch des vorderen Schreitkörpers gelagert ist.

Bei einem derart ausgebildeten, universell verwendbaren Rohrmanipulator können die beiden Schreitkörper in rohraxialer Richtung relativ kurz und kompakt ausgebildet werden. Damit ist die Möglichkeit gegeben, auch enge Rohrkrümmungen zu durchfahren. Die hierbei vorgesehenen Klemmvorrichtungen ermöglichen dabei ein Verspannen mit großen radialen Druckkräften und mit entsprechendem Reibschluß, so daß auch bei Beladung des Rohrmanipulators mit schweren Werkzeugen ein Durchschreiten von steilen bis hin zu vertikalen Rohrpartien möglich ist.

Mit Rücksicht auf eine stabile Anordnung des Rohrmanipulators in der zu prüfenden oder bearbeitenden Rohrleitung empfiehlt es sich, daß der die Antriebsmittel aufnehmende hintere Schreitkörper mit den beiden Stützflanschen versehen ist, wobei diese über einen Flanschkörper miteinander verbunden sind. Man kann aber auch den vorderen Schreitkörper mit zwei Stützflanschen ausrüsten. In diesem Fall empfiehlt es sich, den Manipulatorkopf zwischen den beiden Stützflanschen anzuordnen.

Die gemäß der Erfindung vorgesehene kompakte Ausgestaltung des Rohrmanipulators kann dadurch weiter verbessert werden, daß die an den Stützflanschen vorgesehenen Führungselemente aus Kugelrollen-Einsätzen bestehen, welche gleichfalls strahlen- oder speichenförmig um das jeweilige Stützflanschzentrum herum verteilt angeordnet und am Stützflansch befestigt sind. Diese Führungselemente in Form von Kugelrollen-Einsätzen gewährleisten dabei einen leichten, ruckfreien Lauf des Rohrmanipulators und ermöglichen ein Verdrehen desselben in Umfangsrichtung. Von den Kugelrollen-Einsätzen sind zweckmäßig jeweils zwei spiegelsymmetrisch und tangential benachbart zu einer Klemmkolben-Zylinder-Anordnung am jeweiligen Stützflansch angeordnet.

Zum Betrieb des zweigliedrigen Schreitwerkes und damit auch der als Klemmvorrichtungen vorgesehenen Klemmkolben-Zylinderanordnungen sind Steuerelemente wie Ventile und Schalter erforderlich. Im Interesse einer möglichst kurzen axialen Ausdehnung der beiden Schreitkörper ist es vorteilhaft, solche Steuerelemente einem Tragkörper zuzuordnen, der an seinen beiden Enden mit je einem Kardangelenk versehen ist und als Zwischenglied den vorderen Schreitkörper mit dem hinteren Schreitkörper gelenkig verbindet.

Als Antriebsmittel für das zweigliedrige Schreitwerk kommt vor allem der bereits bekannte Druckmittelantrieb mit einem Schreitzylinder und einem darin längsverschieblich gelagerten, zweiseitig beaufschlagbaren Schreitkolben in Betracht. Bei Verwendung eines solchen Antriebsmittels erzielt man dann eine besonders günstige Raumausnutzung, wenn der Schreitzylinder von dem die beiden Stützflansch verbindenden Flanschkörper gebildet wird, wobei dieser Flanschkörper aus einem mit dem einen Stützflansch verbundenen, den Schreitkolben führenden Doppelflanschteil und aus einem den eigentlichen Schreitzylinder bildenden und mit dem anderen Stützflansch verbundenen Zylinder besteht und die Schalter und Ventile für den Druckmittelantrieb des Schreitkolbens trägt.

Als Antriebsmittel für den Rohrmanipulator kann aber auch ein Elektromagnetantrieb oder ein Spindel-Wandermutter-Antrieb vorgesehen sein, wobei das jeweilige Antriebsmittel zweckmäßig im Inneren des die beiden Stützflansche verbindenden Flanschkörpers angeordnet ist.

Mehrere Ausführungsbeispiele des neuen Rohrmanipulators sind in der Zeichnung dargestellt. Anhand dieser Ausführungsbeispiele wird die Erfindung näher beschrieben und die funktionelle Zuordnung der einzelnen Elemente erläutert. Dabei ist der hintere Schreitkörper einfach als »Schreitkörper« und der vordere Schreitkörper als »Schreitgegenkörper« bezeichnet. Es zeigt

Fig. 1 in schematischer Darstellung den Rohrinnenmanipulator in zwei Positionen innerhalb einer gekrümmten Rohrleitung, wobei der Manipulatorkopf mit einer Rohrinnenschleifvorrichtung ausgerüstet ist;

Fig. 2 eine Draufsicht auf den Schleifkopf des Manipulators nach Fig. 1;

Fig. 3 ein vereinfachtes Schaltbild der elektropneumatischen Steuerung für den Schreitkolben und für die Klemmkolben der Klemmvorrichtung;

Fig. 4 das Schaltbild eines einzelnen Mehrwegventils mit zugehörigem Differenzdruckschalter als Stellungsmelder und einem als PE-Wandler dienenden Druckschalter (C-Kolben);

Fig. 5 in einem Axialschnitt den Schreitkörper des Manipulator-Schreitwerks;

Fig. 6 den Schnitt VI-VI aus Fig. 5, d. h. einen Stützflansch mit Klemmvorrichtungen und Führungselementen;

Fig. 7 den Schnitt VII-VII aus Fig. 5, d. h. die sechseckige Außenkontur des Schreitzylinders mit an dem Schreitzylinderflansch befestigten Druckschaltern;

Fig. 8 den Schnitt VIII-VIII aus Fig. 5, d. h. die auf der anderen Seite des Schreitzylinderflansches befestigten Steuerventile der elektropneumatischen Steuerung;

Fig. 9 die Außenansicht eines Zwischengliedes, das zur Kupplung des Schreitkörpers mit dem den Manipulatorkopf tragenden Gegenschreitkörper dient;

Fig. 10 eine Seitenansicht des Zwischengliedes;

Fig. 11 den gesamten Manipulator mit Schreitkörper, Zwischenglied, Gegenschreitkörper und angebautem Schleifkopf, zum Teil im Schnitt, zum Teil in Ansicht in gestreckter und in gekrümmter Position;

Fig. 12—14 weitere so wie in Fig. 1 innerhalb der Rohrleitung befindliche schematisch dargestellte Ausführungen des Manipulatorkopfes, und zwar:

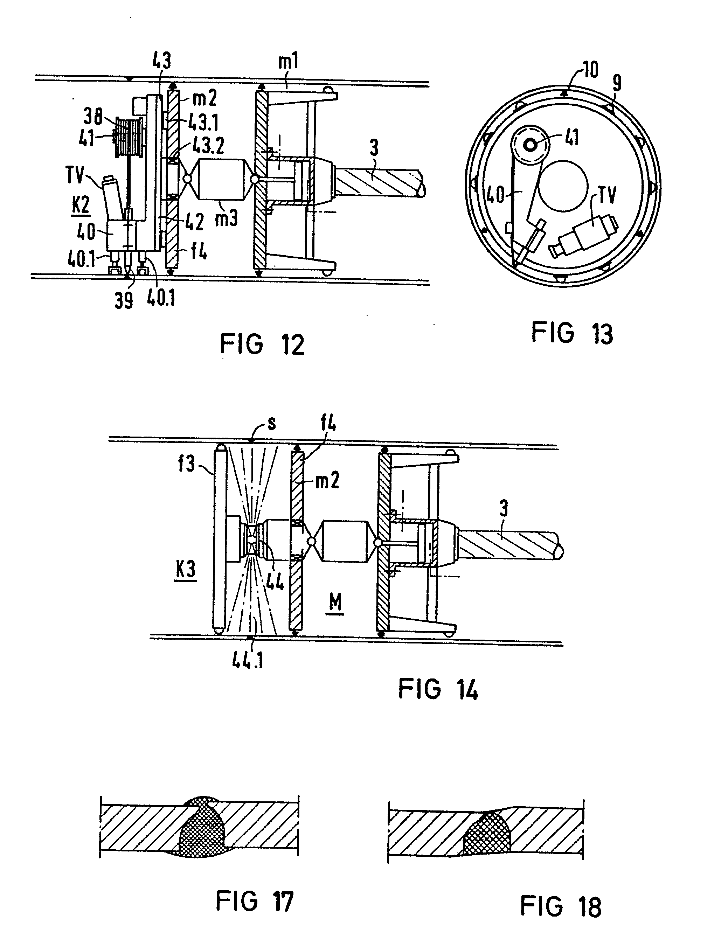

Fig. 12 den Manipulator mit einem Schweißkopf;

Fig. 13 eine Draufsicht auf den Schweißkopf nach Fig. 12;

Fig. 14 den Manipulator mit einer Gamma-Durchstrahlungseinrichtung;

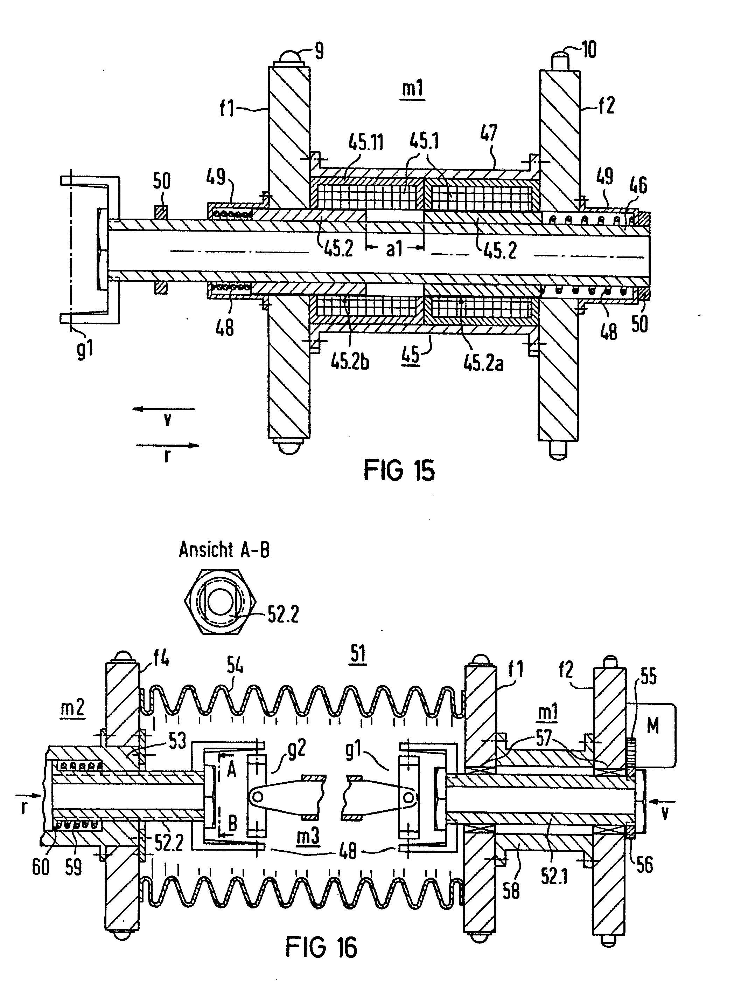

Fig. 15 als Ausführungsvariante einen Elektromagnetantrieb für das Schreitwerk mit Magnetspule und Anker;

Fig. 16 eine weitere Ausführungsvariante des Schreitwerks mit einem Spindel-Wandermutter-Antrieb und

Fig. 17 und 18 eine Schweißnaht bei Rohrversatz vor und nach dem Beschleifen.

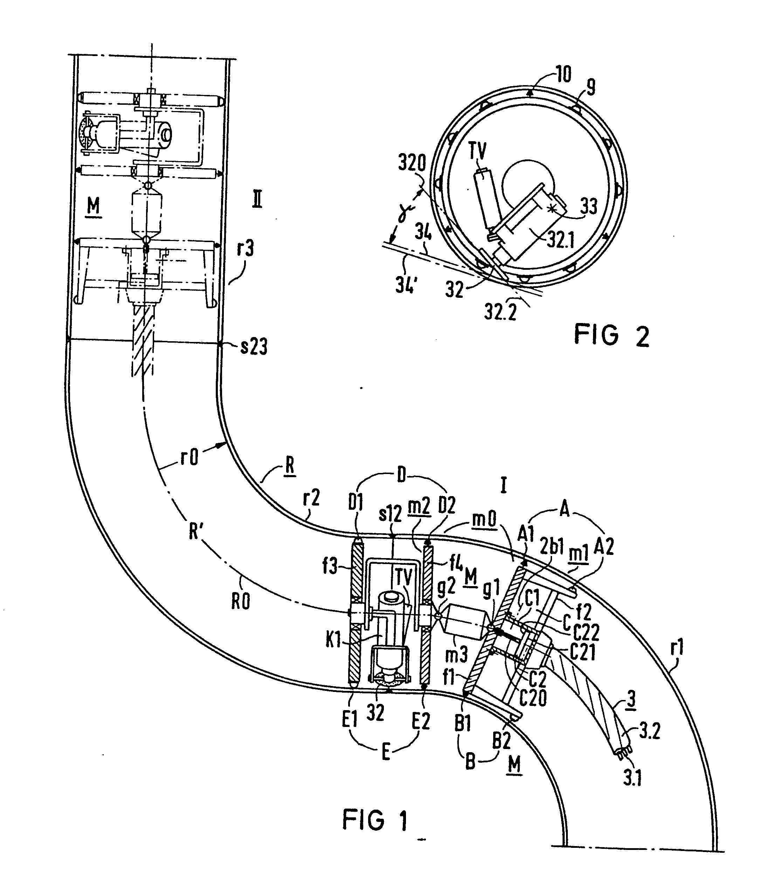

Gemäß Fig. 1 dient der als Ganzes mit M bezeichnete Rohrinnenmanipulator zum fernbedienten Transportieren von Prüfgeräten und Werkzeugen längs vorgegebener Vorschubbahnen durch das Rohrinnere R' einer allgemein mit R bezeichneten Rohrleitung. Diese ist im Ausschnitt und mit drei aneinandergeschweißten Rohrschüssen r1, r2, r3 dargestellt, wobei der Schuß r1 ein erstes (90°)-Rohrknie, der Schuß r2 ein zweites, an das Rohrknie r1 sich S-förmig anschließendes (90°)-Rohrknie r2 bildet und der obere Rohrschuß r3 ein vertikal verlaufender Rohrleitungsabschnitt ist. Die umlaufenden Schweißnähte zwischen r1—r2 sind mit s12 und zwischen r2—r3 mit s23 bezeichnet.

Der Manipulator M ist, wie es Fig. 1 verdeutlicht, in der Lage, sowohl vertikale und horizontale als auch relativ stark gekrümmte Rohrleitungspartien fernbedient gesteuert zu durchwandern und sich darin in einer beliebigen Position zu arretieren. In Position I z. B. kann die Schweißnaht s12 von innen beschliffen werden; hierzu ist der Manipulatorkopf K1, der an dem Schreitgegenkörper m2 gelagert ist, als Rohrinnen-Schleifvorrichtung ausgebildet. Position II stellt eine Zwischenposition dar; der Manipulator M, der gerade die Schweißnaht s23 von innen beschliffen hat, befindet sich auf dem Wege zu einer nächsten (aus Fig. 1 nicht ersichtlichen) Schweißnaht.

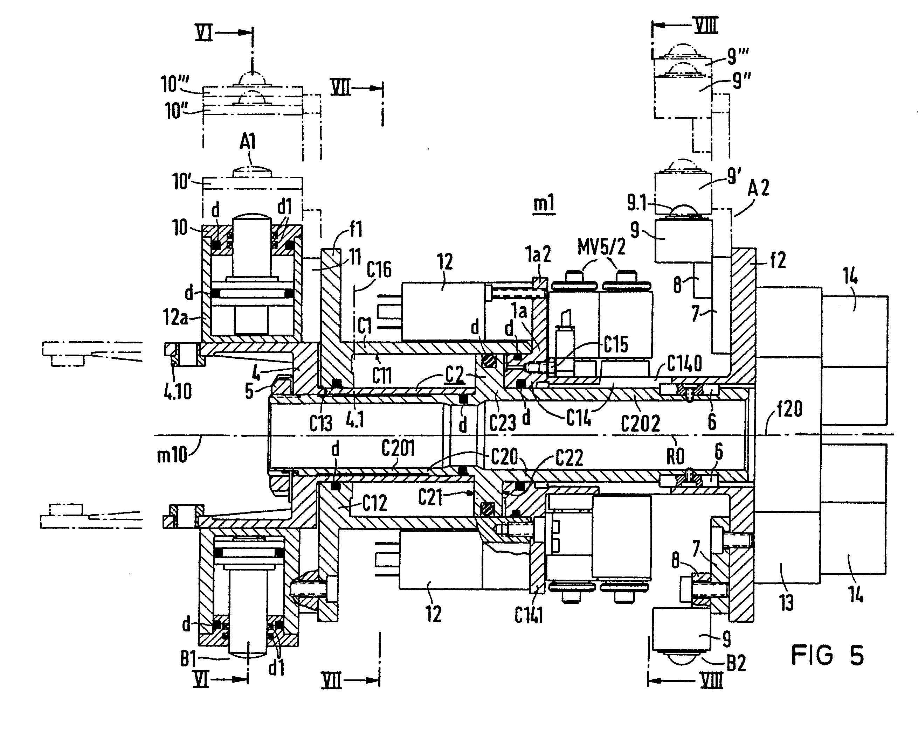

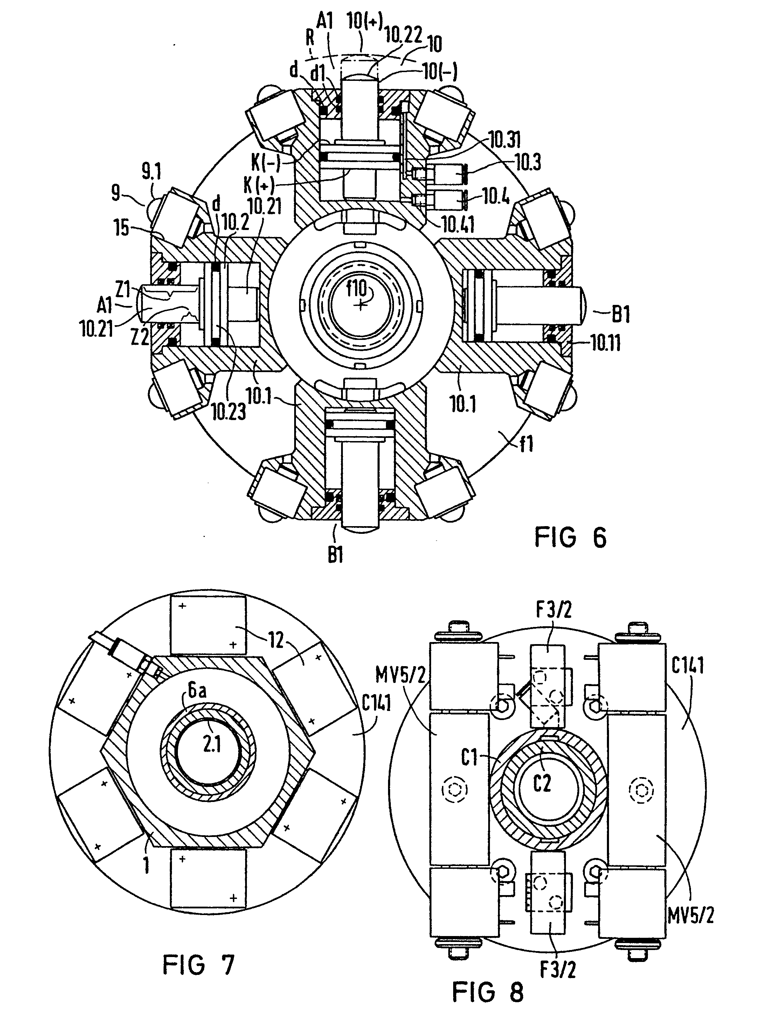

Wie es Fig. 1 prinzipiell zeigt, besteht das Schreitwerk m0 des Manipulators M aus einem Schreitkörper m1 und einem Schreitgegenkörper m2. Beide Körper m1, m2 sind mit pneumatischen Klemmvorrichtungen A, B bzw. D, E (die noch näher erläutert werden) zum Festklemmen der Körper m1, m2 am Rohrinnenumfang versehen. Die Mittel zur rohraxialen Bewegung des Schreitkörpers m1 relativ zum Schreitgegenkörper m2, wenn die Klemmvorrichtungen A, B des Schreitkörpers m1 ausgefahren (in Eingriff) und diejenigen D, E des Gegenkörpers m2 eingefahren (außer Eingriff) sind und umgekehrt, bestehen aus einem Schreitzylinder C1, der mit dem Schreitkörper m1 fest verbunden ist, und einem im Schreitzylinder C1 axial verschieblich gelagerten, zweiseitig beaufschlagbaren Schreitkolben C2, dessen Kolbenstange C20 mit dem Schreitgegenkörper m2 über ein Zwischenglied m3 mit mindestens einem kardanartigen Gelenk g1, g2 gelenkig verbunden ist. Der Schreitkörper m1 ist im dargestellten Beispiel über ein erstes Kardangelenk g1 an das Zwischenglied m3 angelenkt, und an letzteres ist über ein zweites Kardangelenk g2 der Schreitgegenkörper angelenkt. Letzterer trägt den Manipulatorkopf K1, im dargestellten Falle eine Rohrinnen-Schleifvorrichtung, welche in ihrer Arbeitsposition zwischen den Stützflanschen f3 und f4 des Schreitgegenkörpers m2 auf die Rohrachse R0 zentriert und demgemäß genau auf die Umlaufbahn der Schweißnaht s12 ausgerichtet werden kann. Die Klemmvorrichtungen der beiden Stützflansche f3, f4 sind als Ganzes mit D, E und im einzelnen mit D1, E1 bzw. D2, E2 bezeichnet, die Stützflansche des Schreitkörpers sind als Ganzes mit A, B und im einzelnen mit A1, B1 bzw. A2, B2 bezeichnet. Die Führungselemente an den Stützflanschen f1, f2, f3 und f4 zur gleitenden oder rollenden Fortbewegung am Rohrinnenumfang sind in Fig. 1 nicht eingezeichnet; sie befinden sich über den Umfang der Stützflansche verteilt jeweils zwischen aufeinander folgenden Klemmvorrichtungen, sie werden jedoch anhand der Fig. 5 und 6 noch näher erläutert.

An den Manipulator M bzw. sein Schreitwerk m0 ist ein von seiner rückwärtigen (der nicht ersichtlichen Rohreinführöffnung zugewandten) Seite herangeführter flexibler Strang 3 von elektrischen und pneumatischen Versorgungsleitungen 3.1 angeschlossen, der von einem Schutzmantel 3.2 umgeben ist und einem nicht dargestellten Leitungsspeicher an das Schreitwerk herangeführt ist. Wenn die Rohrleitung R ein Gefälle hat oder vertikal nach unten verläuft, kann der Strang 3 zugleich als Absturzsicherung dienen; er ist hierzu entsprechend zugfest auszuführen. Wenn der Manipulator M mit Steigung bzw. vertikal aufwärts verfahren werden soll, kann als Absturzsicherung ein z. B. an dem Zentrum des Stützflansches f3 mit einem Ende eingehängtes Zugseil vorgesehen sein, das durch ein Handloch oder dergleichen am oberen Ende der zu durchfahrenden Rohrleitungsstrecke auf einer arretierbaren Seiltrommel aufgewickelt werden kann. Dieses Zugseil kann locker bleiben, denn die Fortbewegung des Manipulators M geschieht mit seinem Schreitwerk m0.

Die Schreitbewegung des Manipulators M (sein Kopf K1 wird später beschrieben) geschieht wie folgt: Es sei angenommen, daß der Manipulator M aus Stellung I zunächst um eine erste Schritthälfte weiter nach oben bewegt werden soll. Dazu wird der Schreitkörper m1 mit seinen Klemmvorrichtungen A, B arretiert, dagegen der Schreitgegenkörper m2 mit seinen Klemmvorrichtungen D und E außer Eingriff der Rohrwand gebracht. Dann wird die Kolbenseite C21 mit Druck beaufschlagt und die andere Kolbenseite C22 entlüftet, wodurch der Schreitgegenkörper m2 um einen dem Hub des Kolbens C2 entsprechenden Schritt verschoben wird und mit ihm das Zwischenglied m3 und der als Schleifkopf ausgebildete Manipulatorkopf K1. Wenn dies die Meß- bzw. Arbeitsposition wäre, dann würden alle Klemmvorrichtungen A—E wieder in ihre Klemmstellung gebracht und gehalten; soll dagegen der Manipulator M um einen weiteren halben Schritt fortbewegt werden, dann bleibt nur der Schreitgegenkörper m2 arretiert, dagegen der Schreitkörper m1 mit A und B von der Rohrinnenwand wird gelöst, so daß nun bei Beaufschlagung der Kolbenseite C2 der Schreitkörper m1 mit seinem Zylinder C1 um die zweite Schritthälfte nachgezogen wird, wobei die Schrittweite wiederum durch den Kolbenhub bestimmt ist. Das Zwischenglied m3 mit den beiden Kardangelenken g1, g2 an seinen beiden Enden ermöglicht es, daß mit dem Manipulator M Rohre relativ starker Krümmung durchfahren werden können.

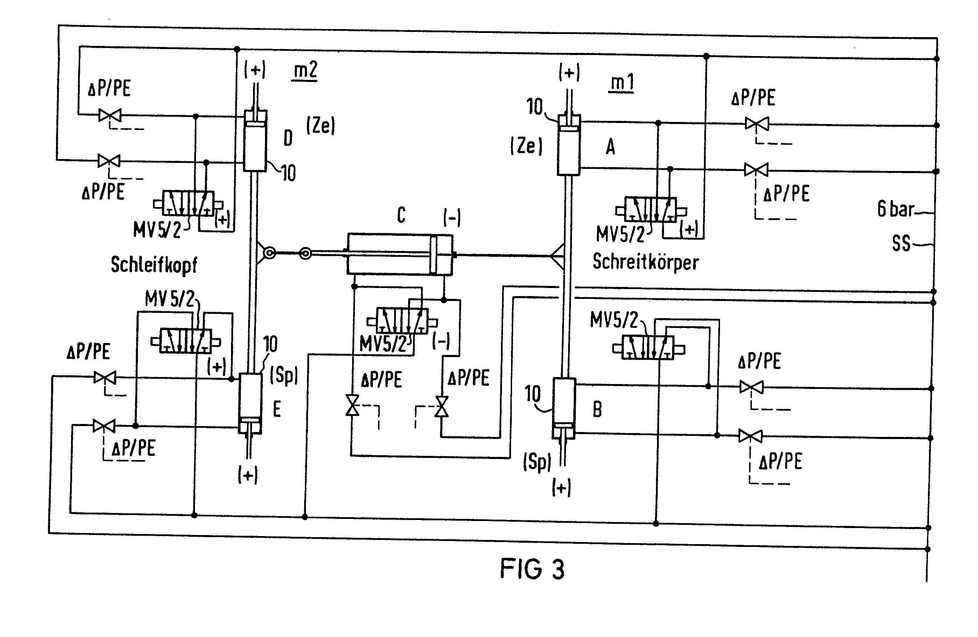

Fig. 3 bis 10 zeigen Einzelheiten des Schreitkörpers m1 und des Zwischengliedes m3, wobei der Fig. 1 entsprechende Teile die gleichen Bezugszeichen haben. Der Schreitkolben C2 ist zum Hindurchführen der Versorgungsleitungen 3.1 als Hohlkolben mit der hohlen Kolbenstange C20 ausgeführt. Die Kolbenstange C20 weist ein vorderes Ende C201 auf, auf welches der Halsteil 4.1 der Gelenkgabel 4 aufgeschoben und mittels der auf das freie Kolbenstangenende verdrehungsgesichert aufgeschraubten Wellenmutter 5 befestigt ist. Der Kolbenbund C23 ist an der Zylinderwand C11 längsverschieblich geführt, der Halsteil 4.1 und mit ihm der Kolbenstangenteil C201 sind an den Flanken der Öffnung C13 des Zylinderbodens C12 geführt. Das andere Kolbenstangenende C202 ist im Halsteil C140 des Doppelflanschteiles C14 geführt, dessen linker Flanschteil C141 den zweiten Zylinderboden bildet, und dessen rechter Flanschteil der schon erwähnte Stützflansch f2 ist. Zwecks präziser Gleitführung sind Paßfe-

4

dern 6 am Außenumfang des Stangenteils C202 befestigt, die in entsprechenden Längsnuten am Innenumfang des Halsteiles C140 gleiten. Über die stufenförmig angeordneten Zwischenplatten 7 und 8 sind als Führungselemente die Kugelrollen-Einsätze 9 in strahlen- oder speichenförmiger Anordnung bezüglich des Stützflanschzentrums f20 angeschraubt. Sie können mit nach außen ragenden Stahlkugeln 9.1 an der Rohrinnenwand entlangrollen (das Kugellager im Inneren der Einsätze 9 ist der Einfachheit halber fortgelassen, weil derartige Einsätze an sich bekannt sind). Die strichpunktiert angedeuteten Konturen 9', 9" und 9''' jeweils größeren Durchmessers deuten an, daß der Stützflansch f2 und der Befestigungskreis der Einsätze 9 in Anpassung an unterschiedliche Rohrinnendurchmesser in entsprechenden Durchmessern gewählt werden kann. Die gleiche Durchmesservergrößerung ist möglich für die in der Inken Hälfte der Fig. 5 und in Fig. 6 dargestellten, als Ganzes mit 10 bezeichneten Klemmvorrichtungen und den zugehörigen Stützflansch f1, siehe die strichpunktiert angedeuteten Konturen 10', 10" und 10''' jeweils größer werdenden Durchmessers. Während für den Stützflansch f2 die Schnittebene so gelegt ist, daß die Führungselemente 9 erkennbar sind, ist beim Stützflansch f1 die axiale Schnittebene so gelegt, daß man die Klemmvorrichtungen 10 erkennt. Letztere sind mit ihrem Zylindergehäuse 10.1 über eine Zwischenplatte 11 an dem mit dem Zylinderboden C12 einstückigen Stützflansch f1 festgeschraubt. Die eine Seite des Flanschteils C141 des Doppelflanschteiles C14 dient zur Befestigung von Druckschaltern 12, welche — wie es Fig. 7 näher zeigt — um den sechseckigen Außenumfang des Schreitzylinders 1 herumgruppiert sind, wodurch sich eine sehr gute Raumausnutzung ergibt. Der genannte Flanschteil C141 weist außerdem die Durckluftanschlüsse C15 zur Bewegung des Schreitkolbens C2 in der einen Richtung auf. Zur Bewegung des Schreitkolbens C2 in der anderen Richtung dienen strichpunktiert bei C16 angedeutete Druckluft-Leitungsanschlüsse. Am Doppelflanschteil C14 befestigt sind ferner, wie es Fig. 8 deutlicher zeigt, größere Magnetventile MV 5/2 und kleinere pneumatische Ventile F3/2, wobei 5/2 2 Schaltzustände bei 5 Druckluftanschlüssen und 3/2 2 Schaltzustände bei 3 Druckluftanschlüssen bedeutet. An allen in Fig. 5 mit d bezeichneten Stellen sind in entsprechende Ringnuten Dichtungsringe eingelegt, die zur Abdichtung der Gleitflächen zwischen Kolben C2 und Zylinder C1 dienen oder zur Abdichtung zwischen dem Doppelflanschteil C14 und den anliegenden Zylinder- und Kolben-Flächen oder die zur Abdichtung der Klemmvorrichtungen 10 dienen. Mit dem Stützflansch f2 des Schreitkörpers m1 ist eine Grundplatte 13 verbunden, an deren Außenseite Differenzdruckschalter 14 befestigt sind.

In Fig. 6 ist stellvertretend für alle Stützflansche anhand des Stützflansches f1 gezeigt, daß dieser mit über seinen Außenumfang verteilten und über seine Kontur hervorragenden Klemmvorrichtungen 10 und Führungselementen 9 versehen ist. Die Klemmvorrichtungen 10 bestehen aus zweiseitig beaufschlagbaren, strahlen- oder speichenförmig um das Stützflanschzentrum f10 herum am Stützflansch f1 angeordneten Klemmkolben-Zylinder-Anordnungen, deren nach außen durch eine Stirnwand 10.11 des Zylindergehäuses 10.1 ragende Kolbenstangen 10.21 des Kolbens 10.2 mit balligen Klemmflächen 10.22 am bei R gestrichelt angedeuteten Innenumfang des Rohres zur Anlage bringbar sind. Die ausgefahrene Klemmstellung der Kolbenstange ist mit 10(+) bezeichnet und gestrichelt angedeutet, die eingefahrene Stellung ist 10(−). In eine Ringnut 10.23 des Kolbenbundes ist wiederum eine Ringdichtung d eingelegt, ebenso in eine Ringnut am Außenumfang des Zylinderdeckels 10.11 ein weiterer Dichtring d. Die in entsprechende Ringnuten am Innenumfang des Zylinderdeckels 10.11 eingelegten Gleitringe d1 können mit einem Schmiermitteldepot versehen sein (vgl. auch Fig. 5). 10.3 und 10.4 sind Anschlußnippel für Druckschläuche, welche über entsprechende Druckluftkanäle 10.31 bzw. 10.41 entweder die äußere Kolbenseite K(−) zwecks Rückstellung oder die innere Kolbenseite K(+) zwecks Ausfahrens der Kolbenstange 10.21 beaufschlagen. Es sind pro Stützflansch, wie ersichtlich, vier kreuzförmig angeordnete Klemmvorrichtungen 10 vorgesehen. Weiterhin ist in spiegelsymmetrischer Anordnung tangential benachbart und beidseits je einer Klemmvorrichtung 10 je ein Kugelrollen-Einsatz 9 in entsprechenden Aufnahmen 15 des Zylindergehäuses 10.1 befestigt. Pro Stützflansch sind damit vier Klemmvorrichtungen 10 und acht Kugelrollen-Einsätze 9 vorgesehen. Diese über den Umfang des Stützflansches gleichmäßig verteilten Klemmvorrichtungen 10 und Führungselemente 9 gewährleisten, daß auch Rohrabgänge überfahren werden können.

Bei allen Stützflanschen f1 bis f4 (vgl. Fig. 1) sind zwei Gruppen von Klemmvorrichtungen 10 vorgesehen. So muß man z. B. beim Stützflansch f1 (Fig. 6) unterscheiden zwischen der Gruppe A1, die der Zentrierung des Schreitwerks m0 auf Rohrmitte R0 dient und der Gruppe B1, die dann bei erfolgter Zentrierung die Spannkräfte liefert. Deswegen ist der Kolbenbund bei Gruppe A1 in einem solchen Abstand Z1 vom freien Kolbenstangenende und in einem solchen Abstand Z2 vom Zylinderdeckel befestigt, daß in der ausgefahrenen Position 10(+) der beiden A1-Kolben der Abstand f10−10.22 jeweils dem Rohrinnenradius ro (vgl. Fig. 1) entspricht. Das heißt, die A1-Klemmvorrichtungen (und dementsprechend die A2-, D1- und D2-Klemmvorrichtungen) werden vor dem Einfahren auf den Rohrinnendurchmesser einjustiert. Die Klemmvorrichtungen A1, B1; A2, B2; D1, E1 und D2, E2 jedes Stützflansches sind also für jeden Schritt bzw. für jede Schritthälfte selbstzentrierend.

Fig. 3 zeigt ein vereinfachtes Schaltbild der elektropneumatischen Steuerung, wobei jeder Schreitkörper bzw. Schreitgegenkörper m1, m2 nur mit je zwei Klemmvorrichtungen 10 gezeichnet ist, welche im Falle m1 die Gruppen A und B und im Falle m2 die Gruppen D und E repräsentieren, wobei A und D die zentrierenden und B und E die spannenden Kolbengruppen sind. Alle Klemmkolben, ausgenommen der Schreitkolben C, sind in der ausgefahrenen (+)-Stellung gezeichnet, d. h. das Schreitwerk m0 ist an allen Stützflanschen festgeklemmt. SS ist die 6-bar-Druckluft-Sammelschiene; die 0,5-bar-Sammelschiene (Entlüftungsdruck) und ihre Abzweige sind nicht gezeichnet. Bis auf gestrichelt angedeutete Impulsleitungen der $\Delta$P/PE-Schalterkombinationen sind die elektrischen Steuerleitungen nicht gezeichnet (der besseren Übersichtlichkeit wegen). Es bedeuten:

M5/2     die schon erwähnten Magnetventile,

$\Delta$P/PE     die aus einem Druckdifferenzschalter und einem pneumatisch-elektrischen Wandler bestehenden $\Delta$P/PE-Schaltkombinationen, von denen der $\Delta$P-Schalter bei Erreichen der (+)-Kolbenendlage des zugeordneten Stellkolbens (der ein Schreit- oder Klemmkolben sein kann) ein Drucksignal zum Schließen der Kontaktbrücke des PE-Wandlers gibt, die damit ein elektrisches Signal abgibt. Dementsprechend wird auch bei Erreichen der (−)-Kolbenendlage ein Signal abgegeben, und zwar ein 0-Signal zum Öffnen der Kontaktbrücke des PE-Wandlers.

Der Funktionsablauf ergibt sich wie folgt:

6

Befehlsfolge beim Schreiten vorwärts und rückwärts

| Schritt-Bezeichnung | Bezeichnung der Befehle | A MV 5/2 | Kolben | B MV 5/2 | Kolben | C MV 5/2 | Kolben | D MV 5/2 | Kolben | E MV 5/2 | Kolben |
|---|---|---|---|---|---|---|---|---|---|---|---|
| | Grundstellung | (+) | (+) | (+) | (+) | (−) | (−) | (+) | (+) | (+) | (+) |
| **1 Schritt vorwärts** | | | | | | | | | | | |
| 1. Halbschritt V | 1. Lösen D, E | (+) | (+) | (+) | (+) | (−) | (−) | (−) | (−) | (−) | (−) |
| | 2. Schreiten C vorwärts | (+) | (+) | (+) | (+) | (+) | (+) | (−) | (−) | (−) | (−) |
| | 3. Zentrieren bei D | (+) | (+) | (+) | (+) | (+) | (+) | (+) | (+) | (−) | (−) |
| | 4. Spannen bei D, E | (+) | (+) | (+) | (+) | (+) | (+) | (+) | (+) | (+) | (+) |
| 2. Halbschritt V | 5. Lösen A, B | (−) | (−) | (−) | (−) | (+) | (+) | (+) | (+) | (+) | (+) |
| | 6. Schreiten C vorwärts | (−) | (−) | (−) | (−) | (−) | (−) | (+) | (+) | (+) | (+) |
| | 7. Zentrieren bei A | (+) | (+) | (−) | (−) | (−) | (−) | (+) | (+) | (+) | (+) |
| | 8. Spannen bei A, B | (+) | (+) | (+) | (+) | (−) | (−) | (+) | (+) | (+) | (+) |
| **1 Schritt rückwärts** | | | | | | | | | | | |
| 1. Halbschritt | 1. Lösen A, B | (−) | (−) | (−) | (−) | (−) | (−) | (+) | (+) | (+) | (+) |
| | 2. Schreiten C rückwärts | (−) | (−) | (−) | (−) | (+) | (+) | (+) | (+) | (+) | (+) |
| | 3. Zentrieren bei A | (+) | (+) | (−) | (−) | (+) | (+) | (+) | (+) | (+) | (+) |
| | 4. Spannen bei A, B | (+) | (+) | (+) | (+) | (+) | (+) | (+) | (+) | (+) | (+) |
| 2. Halbschritt | 5. Lösen D, E | (+) | (+) | (+) | (+) | (+) | (+) | (−) | (−) | (−) | (−) |
| | 6. Schreiten C rückwärts | (+) | (+) | (+) | (+) | (−) | (−) | (−) | (−) | (−) | (−) |
| | 7. Zentrieren bei D | (+) | (+) | (+) | (+) | (−) | (−) | (+) | (+) | (−) | (−) |
| | 8. Spannen D, E | (+) | (+) | (+) | (+) | (−) | (−) | (+) | (+) | (+) | (+) |

0 061 078

(Ze) besagt in Fig. 3, daß A und D Zentrierkolben sind, (Sp) besagt, daß B und E Spannkolben sind.

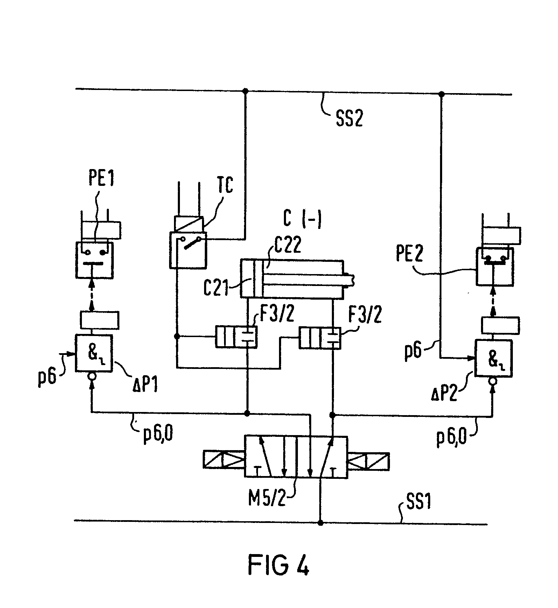

Fig. 4 zeigt vergrößert den C-Kolben mit aus Darstellungsgründen seitenverkehrtem C-Zylindergehäuse und das zugehörige Magnetventil M5/2 mit angeschlossenen $\Delta$P/PE-Schaltkombinationen. TC ist ein über einen Taster betätigbares Magnetventil, mit welchem über die beiden druckmittelbetätigten 3/2-Flutventile F3/2 und F3/2 die beiden Kolbenseiten C21 und C22 gleichzeitig mit Druckluft geflutet werden können. In dieser Flutstellung »schwimmt« der C-Kolben in seinem Zylindergehäuse. Wird dann das Ventil M5/2 im (+)-Sinne oder (−)-Sinne kurzzeitig betätigt (getippt), dann führt der C-Kolben sehr kleine Schritte in (+)- oder (−)-Richtung aus, so daß damit eine Fein-Positionierung des Manipulatorkopfes vorgenommen werden kann (diese wird mit der TV-Kamera kontrolliert, siehe z. B. Fig. 1, 2 und 13).

Die Druckdifferenzschalter $\Delta$P, im einzelnen mit $\Delta$P1 und $\Delta$P2 bezeichnet, haben jeweils zwei Anschlüsse für Druckimpulsleitungen p6, die an die 6-bar-Sammelschiene SS2 angeschlossen sind und p6,0, welche je nach Stellung von M5/2 entweder mit der 6-bar-Sammelschiene SS1 oder mit der 0,5-bar-Leitung Verbindung haben. Da p6,0 von $\Delta$P2 mit SS1 verbunden ist, hat der angekoppelte Wandler PE2 seine Schließstellung. Andererseits hat PE1 seine Offenstellung, da p6,0 von $\Delta$P1 entlüftet ist. An Signallämpchen, die an die Kontakte von PE1 und PE2 und eine Spannungsquelle angeschlossen sind, kann die jeweilige Kolben-Endstellung C(−) oder C(+) sichtbar gemacht werden. Die Druckdifferenzschalter $\Delta$P1 und $\Delta$P2 sind zusätzlich durch ein &-Zeichen markiert.

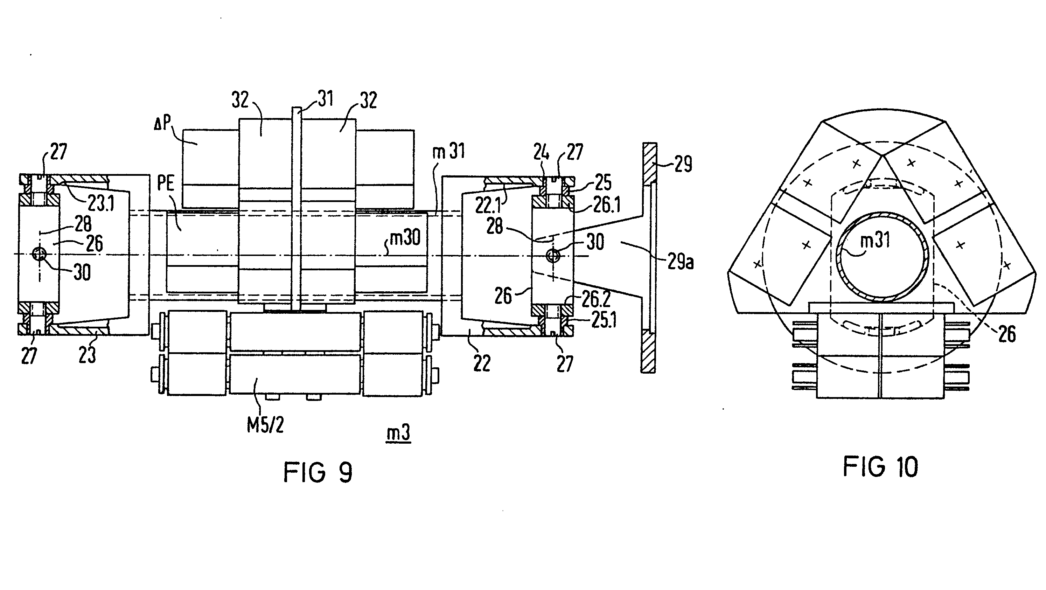

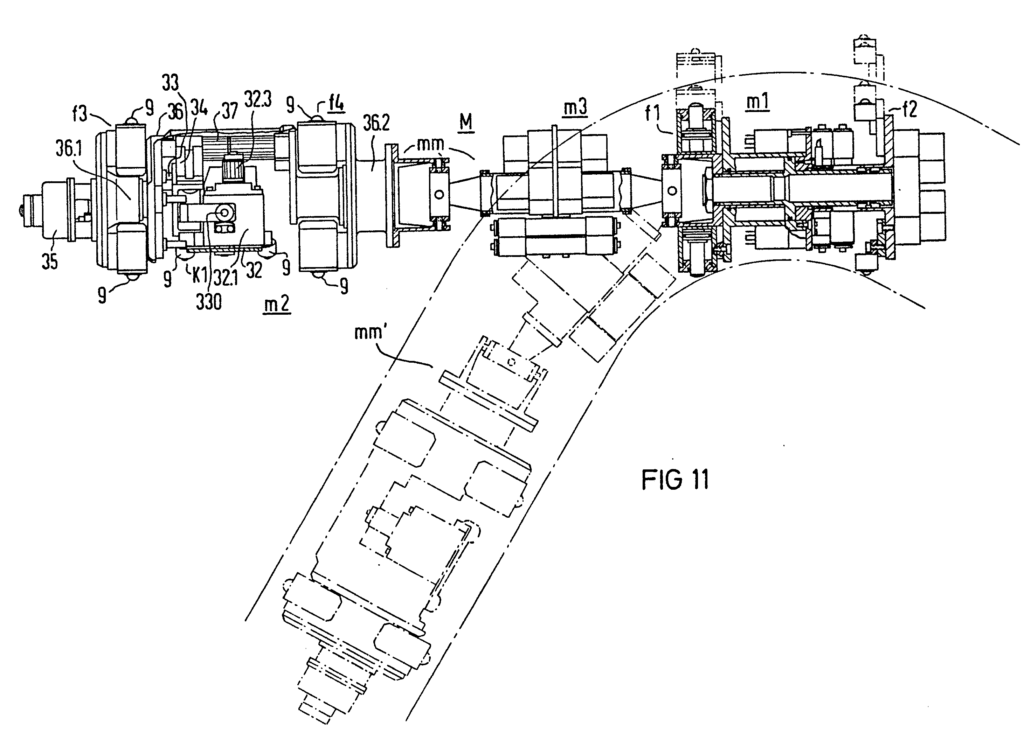

Fig. 9 zeigt, daß das Zwischenglied m3 aus einem hülsenförmigen Tragkörper m31 mit Gelenkgabeln 22 und 23 an seinen beiden Enden besteht, wobei in die Gelenkgabelenden 22.1, 23.1 in entsprechende Bohrungen 24 die Gelenkbuchsen 25 mit einem Kragen 25.1 eingesetzt sind. Die Gelenkrahmen 26, die, wie es Fig. 10 zeigt, die Kontur eines Kreisabschnitts haben, sind mittels der in ihre oberen und unteren Rahmenteile 26.1, 26.2 eingeschraubten Zylinderstifte 27 um die Kardangelenkachse 28 schwenkbar. Angekuppelt an den Ringrahmen 26 ist die Gabel 29a eines Kupplungsflansches 29 über entsprechende (nicht im einzelnen dargestellte) Zylinderstifte, so daß also Kupplungsflansch 29 und Zwischenglied m3 relativ zueinander noch um die Gelenkachse 30 schwenkbar sind. An den Kupplungsflansch 29 wird dann, wie es die Gesamtdarstellung nach Fig. 11 näher zeigt, der Schreitgegenkörper m2 angeflanscht. Die Gabel 23 (linke Hälfte der Fig. 9) weist genauso wie die Gabel 22 eine senkrecht in die Papierebene hineingehende zweite Kardangelenkachse 30 auf, mit der dann die Gelenkgabel 4 des Schreitkörpers m1 (siehe Fig. 5) über entsprechende Gelenkbuchsen 4.1 und (nicht dargestellte) Zylinderstifte zu kuppeln ist, wozu das Zwischenglied m3 um seine Längsachse m30 oder der Schreitkörper m1 mit seiner Gabel 4 um 90° um die Längsachse m10 zu drehen wäre. Der hülsenförmige Tragkörper m31 des Zwischengliedes m3 ist mit einem mittigen Tragflansch 31 versehen, von dessen beiden Flanschseiten sich Grundplattenteile 32 mit einer Polygon-Kontur erstrecken. Tragflansch 31 und Grundplattenteile 32 dienen zur Befestigung von 5/2 Magnetventilen M5/2, Druckschaltern PE und Differenzdruckschaltern $\Delta$P. Die verbindenden elektropneumatischen Steuerleitungen sind in Fig. 9 und 10 ebenso wie in Fig. 1, 2 sowie 5 bis 11 der besseren Übersichtlichkeit wegen fortgelassen. Fig. 11 zeigt den Manipulator M mit Schreitkörper m1, Zwischenglied m3 und den Schreitgegenkörper m2 mit Manipulatorkopf K1 in einer geraden Stellung mm, die der Manipulator beim Einfahren in gerade Rohrabschnitte oder Durchfahren derselben einnimmt. Die gestrichelt angedeutete gekrümmte Stellung mm′ nimmt der Manipulator z. B. innerhalb eines gekrümmten Rohrabschnittes ein. Es ist ein Rohrabschnitt mit extremer Krümmung von 90° eingezeichnet und verdeutlicht, daß aufgrund der kardanischen Gelenkverbindung mit dem Zwischenglied m3 das Durchfahren derartiger Krümmungen mühelos gemeistert wird.

Die vereinfachte Ansicht auf den Schleifkopf K1 nach Fig. 2 zeigt, daß der Lager- und Antriebskörper 32.1 der Schleifscheibe 32 um eine rohr-achsparallele Achse 33 derart einstellbar gelagert ist, daß die Schleifscheibenebene 320, verdeutlicht durch eine strichpunktierte Gerade, mit der in den jeweiligen Schleifscheiben-Berührungspunkt 32.2 verlagerten Rohrwand-Tangente 34 einen spitzen Anstellwinkel bildet. Die äußere Rohrwand-Tangente ist mit 34′ bezeichnet. Dargestellt ist ein Anstellwinkel $\gamma = 30°$. Je kleiner dieser Winkel ist, um so flacher ist die Schleif-Eintiefung und um so größer ist die Schleif-Breite.

Dies hat besondere Bedeutung für das Rohrinnen-Schleifen, wo man die abzuschleifende Schweißnaht und den Schleifvorgang nur über die TV-Kamera beobachten kann. Im Ergebnis erzielt man beliebig sanft verlaufende Übergänge, auch bei Rohrversatz, wie es Fig. 17 (vor dem Schleifen) und Fig. 18 (nach dem Schleifen) zeigen. Damit auch bei Rohrversatz (vgl. Fig. 17, 18) ein oberflächengerechtes Schleifen möglich ist, kann der Antriebs- und Lagerkörper 32.1 der Schleifscheibe 32 — siehe Fig. 11 — um die rohrquere Achse 330 schwingen. Wenn also der Antriebs- und Lagerkörper 32.1 durch nicht näher dargestellte Stellzylinder 34 mit seinen Rollkörpern 9 gegen die Rohrwand gedrückt wird, stellen sich diese entsprechend dem Rohrversatz ein, und nun kann die Schleifscheibe 32 mittels ihres Zustell-Antriebes 32.3, der einen Elektromotor mit (nicht näher ersichtlichem) Spindel-Wandermutter-Antrieb umfaßt, gefühlvoll in Schleif-Eingriff gebracht werden. Im Inneren von Teil 32.1 ist ein Antriebsmotor für die Schleifscheibe, z. B. ein Luftmotor, vorgesehen. Durch den Rundlaufmotor 35 mit Untersetzungsgetriebe kann der innerhalb der Lagergehäuse 36.1 und 36.2 an den Stützflanschen f3 und f4 drehbar gelagerte Drehrahmen 36 in langsame Umdrehung um die Rohrachse versetzt werden. Der Stellmotor 37 dient der Axialfeinverstellung des Zylinders 34 und damit des Teils 32.1 und der darin gelagerten Schleifscheibe 32. Die Beleuchtungseinrichtung und die TV-Kamera TV sind in Fig. 11 nicht dargestellt; sie können am Teil 32.1 befestigt sein.

Fig. 12 und 13 zeigen in einer den Fig. 1 und 2 entsprechenden schematischen Darstellung, daß am Schreitgegenkörper m2 ein Manipulatorkopf K2 in Form einer Rohrinnen-Schweißvorrichtung befestigt ist. TV ist wieder die Fernsehkamera (es versteht sich, daß außer der Fernsehkamera auch hier eine Beleuchtungseinrichtung vorhanden sein muß, die jedoch nicht dargestellt ist), 38 ist ein Schweißdrahtspeicher, der durch die eine Schweißelektrode 39 zur Schweißstelle geführt wird, 40.1 sind Füße eines Antriebs- und Lagerkörpers 40. Die Achse 41 des Schweißdrahtspeichers 38 fällt zusammen mit der Pendelachse für den Antriebs- und Lagerkörper 40. Teil 40 sitzt an einem Drehteller 42, der mittels Axial- und Radiallagern 43.1, 43.2 am Stützflansch f4 gelagert und durch nicht näher dargestellte Antriebsmotore in Umfangsrichtung zwecks Vorschubs langsam gedreht wird. Fig. 12 zeigt auch, daß man beim Manipulatorkopf K2 mit einem einzigen Stützflansch f4 auskommt, wenn auch zwei Stützflansche pro Manipulatorglied größere Verspannkräfte ergeben.

Fig. 14 zeigt, daß am Schreitgegenkörper m2 des Manipulators M als Manipulatorkopf K3 eine Gamma-Durchstrahlungseinrichtung zum Durchstrahlen von Rohrnähten s gelagert ist. Von der positionierten Strahlenquelle 44 geht der Strahlenkegel 44.1 aus, der den gesamten Umfang der Schweißnaht s erfaßt. Auf außen am Rohr angebrachte, nicht dargestellte strahlungsempfindlichen Filmen oder fotografischen Platten werden eventuelle Ungänzen der Schweißnaht s erkennbar gemacht.

Es ist weiterhin möglich, andere Inspektions- oder Reparaturgeräte mit dem Manipulator M zu koppeln, z. B. eine Ultraschall-Prüfeinrichtung.

Bei der Manipulatorausführung nach Fig. 15 bestehen die Mittel zu seiner rohraxialen Bewegung aus einem Elektromagnetantrieb 45, wobei z. B. der Schreitkörper m1 eine in beiden Kraftrichtungen wirkende Magnetspulenanordnung 45.1 und zwei zugehörige Magnetanker 45.2 aufweist. Die Magnetanker 45.2 sitzen als hülsenförmige Magneteisenkörper fest auf der hohlzylindrischen Kupplungsstange 46, welche an ihrem linken Ende über mindestens eine kardanartige Gelenkstelle g1 mit dem (nicht dargestellten) Schreitgegenkörper gekuppelt ist. Die beiden Magnetspulen 45.1 sind von Topfmagnetgehäusen 45.11 jeweils umschlossen, derart, daß sich bei erregter Magnetspule die Stellung 45.2a des zugehörigen Ankers und damit ein in sich geschlossener Weg für die Feldlinien ergibt, wogegen bei entregter Magnetspule (Ankerstellung 45.2b) der Anker axial aus der Magnetspule verschoben ist. Die Stützflansche sind wiederum mit f1, f2, die Führungs- und Klemmvorrichtungen mit 9, 10 bezeichnet. Durch den Doppelflanschkörper 47 werden die Stützflansche f1, f2 auf Abstand gehalten und zu einer mechanisch stabilen Einheit verbunden, welche in ihrem Inneren die Magnetspulenanordnung 45 aufnimmt. 48 sind Schraubendruckfedern an beiden Enden des Schreitkörpers m1, welche an den äußeren Stirnseiten der Stützflansche f1 bzw. f2 innerhalb von an die Stützflansche angeflanschten Federtöpfen 49 so angeordnet sind, daß sie die Kupplungsstange 46 umgreifen und mit einem Ende an je einem der Anker 45.2 und mit dem anderen Ende am Boden des jeweiligen Federtopfes 49 anliegen. Sie dienen der Rückstellung und der Dämpfung. Zur genauen Definition der beiden Positionen der Kupplungsstange 46 dienen die beiden auf deren Außenumfang fest sitzenden Anschlagkragen 50, welche in den beiden Schaltpositionen entweder mit dem Boden des rechten Federtopfes 49 (dargestellt) oder dem des linken Federtopfes 49 zur Anlage kommen. Die beiden Magnetanker 45.2 haben voneinander den definierten Axialabstand a1, welcher auch dem Hub dieses Schreitkörpers m1 entspricht. Dieser Hub kann naturgemäß auch verkleinert und damit eine feinere Schrittfolge erzielt werden.

Gezeigt ist ein Zustand, bei dem die rechte Magnetspule 45.2 erregt und ihr Anker dementsprechend angezogen ist. Wenn bei verriegeltem Schreitgegenkörper m2 und entriegeltem Schreitkörper m1 die rechte Magnetspule entregt und die linke Magnetspule 45.1 erregt wird, so bewegt sich der Schreitkörper m1 um einen Schritt in Richtung des Pfeiles v (Vorwärtsrichtung). Würde in dieser Stellung dann der Schreitkörper m1 arretiert und der Schreitgegenkörper entriegelt und wieder die dargestellte Erregung vorgenommen, d. h. rechte Magnetspule erregt, linke entregt, dann würde der Schreitgegenkörper um einen Schritt in Richtung v verschoben. Entsprechendes würde für die Befehlsfolge beim Rückwärtsschreiten in Richtung r gelten.

Die übrige Ausführung des Schreitwerkes m0 nach Fig. 15 bzw. des übrigen Manipulators ist so wie beim ersten Ausführungsbeispiel.

Eine weitere Schreitwerkausführung, mit welcher eine Fortbewegung in besonders kleinen wie auch größeren Schritten möglich ist, zeigt Fig. 16. Dabei bestehen die Mittel zur rohraxialen Bewegung des Manipulators aus einem Spindel-Wandermutter-Antrieb 51. Am Schreitkörper m1 ist ein in beiden Drehrichtungen antreibbarer Gewindespindelteil 52.1 drehbar gelagert, der über mindstens ein kardanartiges Gelenk g1, g2 mit einem zweiten Spindelteil 52.2 verbunden ist. Auf letzterer sitzt undrehbar, aber axial geführt die Wandermutter 53, die mit dem Stützflansch f4 des Schreitgegenkörpers m2 fest verbunden ist. Schreitkörper m1 und Schreitgegenkörper m2 sind über ein Wellrohr 54 so miteinander gekoppelt, daß eine gegenseitige Axialverschiebung möglich, jedoch eine gegenseitige Verdrehung verhindert ist. Das Wellrohr, das vorzugsweise aus torsionssteifem Edelstahl besteht, ist mit seinen Enden an den Stützflanschen f1 bzw. f4 befestigt und umgibt die Kardangelenke g1, g2 des nur im Ausschnitt dargestellten Zwichengliedes m3. Der außen am Stützflansch f2 befestigte Motor M, insbesondere ein Elektromotor mit Untersetzungsgetriebe, ist über ein Ritzel 55 mit dem Stirnkranz 56

**0 061 078**

des Gewindespindelteils 52.1 gekoppelt. Letzterer ist am Schreitkörper m1, d. h. seinen Stützflanschen f1, f2, mittels Wälzlagern drehbar gelagert und wird von dem hohlzylindrischen Doppelflanschteil 58 umgeben. Letzterer vereinigt die beiden Stützflansche f1, f2, wie anhand der vorherigen Ausführungsbeispiele schon beschrieben, zu einem starren, stabilen Gebilde.

Bei Betrachtung des Schreitwerks in Richtung v (vorwärts), bewegt sich der Schreitgegenkörper m2 in Vorwärtsrichtung, wenn seine Stützflansche entriegelt, die Stützflansche f1, f2 des Schreitkörpers dagegen arretiert sind und wenn der Motor M (bei einem Rechtsgewinde der Spindel 52) im Gegenzeigersinn gedreht wird. Im einzelnen.

| Arretierung von | | Drehung Motor M | Bewegung von | |
| m1 | m2 | | m1 | m2 |
| --- | --- | --- | --- | --- |
| fest | gelöst | ↺ | — | ←v |
| gelöst | fest | ↻ | ←v | — |
| gelöst | fest | ↺ | →r | — |
| fest | gelöst | ↻ | — | →r |

Im sogenannten Tippbetrieb können dem Motor bei Bedarf kurzzeitige Drehimpulse erteilt werden, so daß nur kleine Schritte ausgeführt werden. Die zwischen Spindelbund 60 und Wandermutter 53 eingelegte Schraubendruckfeder 59 dient der Dämpfung, d. h. als Puffer. Der übrige grundsätzliche Aufbau des Schreitwerks bzw. Manipulators ist wieder wie beim 1. Beispiel beschrieben.

In Fig. 11 wird im folgenden zu der sehr vorteilhaften Arbeitsweise des Schleifkopfes noch folgendes nachgetragen: Es ist ersichtlich, daß der portalartige Antriebs- und Lagerkörper 32.1 um eine rohrquere Pendelachse 330 schwenkbar derart gelagert ist, daß er mit seinen Führungskörpern 9 der Rohrinnenkontur entsprechend andrückbar ist, daß die Andrückung mittels eines die rohrquere Pendelachse in Richtung auf die Rohrwand verstellenden, vorzugsweise pneumatischen Stellzylinders erfolgt und daß die pneumatischen Andrückkräfte jeweils größer sind als die resultierenden Schleifkräfte, die sich aus der Schleifscheiben-Zugkraft und den Schleifreaktionskräften ergeben. Zur Zustellung der Schleifscheibe 32 hat sich eine Kugelumlaufspindel für den Antrieb 32 als vorteilhaft erwiesen (wegen geringer Reibung, geringer Abnutzung und sanfter Zustellung). Diese Zustellung erfolgt ersichtlich in Richtung der Schleifscheiben-Achse, so daß also der Anstellwinkel $\gamma$ (vgl. Fig. 2) konstant bleibt.

Nachzutragen ist weiterhin, daß auch das Zwischenglied m3 mit den Antriebsmitteln (C, C1, C2) zur rohraxialen Fortbewegung des Schreitwerks m0 ausgerüstet sein könnte, d. h. dann, wenn es nicht nur ein einziges Kardangelenk g1, sondern zwei im Abstand zueinander angeordnete Kardangelenke g1, g2 oder mehr davon aufweist.

**Patentansprüche**

1. Selbstfahrender Manipulator zum fernbedienten Transpotieren eines Werkzeuges und/oder eines Prüfgerätes durch das Innere eines Rohrs oder einer Rohrleitung, bestehend aus einem zweigliedrigen Schreitwerk mit einem vorderen und einem hinteren Schreitkörper (m1, m2), mit einem die beiden Schreitkörper gelenkig miteinander verbindenden kardanartigen Gelenk (m3), mit Antriebsmitteln (C) zur rohraxialen Fortbewegung des einen Schreitkörpers relativ zum anderen Schreitkörper und mit einer am vorderen Schreitkörper (m2) vorgesehenen Halterung für einen das Werkzeug (32) und/oder das Prüfgerät tragenden Manipulatorkopf (K1),

— bei dem der eine Schreitkörper (m1) an seinen beiden Enden je ein Stützteil (f1, f2) aufweist, das am Umfang verteilt Führungselemente (9) zur rollenden Fortbewegung des Manipulators trägt, und der andere Schreitkörper (m2) wenigstens ein gleichartiges Stützteil (f4) aufweist,
— bei dem am äußeren Umfang jedes Schreitkörpers (m1, m2) radial aus- und einfahrbare Klemmvorrichtungen (A, B, D, E) vorgesehen sind,
— bei dem die Antriebsmittel (C) dem einen Schreitkörper (m1) zugeordnet sind und ein in rohraxialer Richtung bewegbares, mit dem anderen Schreitkörper (m2) verbundenes Teil (C2) aufweisen,
— und bei dem an den hinteren Schreitkörper (m1) Versorgungsleitungen (3) herangeführt sind,

dadurch gekennzeichnet,

a)   daß die Stützteile der Schreitkörper als Stützflansche (f1, f2, f3, f4) ausgebildet sind, die außer den Führungselementen (9) auch die Klemmvorrichtungen (A, B, C, D) tragen, welche über die Kontur der Stützflansche hervorragen,

b)   daß bei dem mit zwei Stützflanschen (f1, f2) versehenen Schreitkörper (m1) die beiden Stützflansche starr miteinander verbunden sind,

c)   daß die Klemmvorrichtungen aus zweiseitig beaufschlagbaren, strahlen- oder speicherförmig um das Zentrum des jeweiligen Stützflansches herum angeordneten und an diesem befestigten Klemmkolben-Zylinder-Anordnungen (10) bestehen, deren nach außen durch eine Zylinder-Stirnwand (10.11) ragende Kolbenstangen (10.2) ballige Klemmflächen (10.22) aufweisen,

d)   und daß der die Antriebsmittel (C) aufnehmende Schreitkörper (m1) den hinteren Schreitkörper bildet, wobei die Versorgungsleitungen (3.1) in Form eines flexiblen Stranges (3) an diesen Schreitkörper herangeführt sind und der Manipulatorkopf (K1) an einem Stützflansch (f4) des vorderen Schreitkörpers (m2) gelagert ist.

2. Rohrmanipulator nach Anspruch 1, dadurch gekennzeichnet, daß der die Antriebsmittel aufnehmende hintere Schreitkörper (m1) mit den beiden Stützflanschen (f1, f2) versehen ist, wobei diese über einen Flanschkörper miteinander verbunden sind.

3. Rohrmanipulator nach Anspruch 1 oder 2, dadurch gekennzeichnet, daß der vordere Schreitkörper (m2) zwei Stützflansche (f3, f4) aufweist, zwischen denen der Manipulatorkopf (K1, K3) angeordnet ist.

4. Rohrmanipulator nach einem der Ansprüche 1 bis 3, dadurch gekennzeichnet, daß die Stützflansche (f1—f4) mit definiertem Ringspalt an den Rohrinnenquerschnitt angepaßt sind.

5. Rohrmanipulator nach einem der Ansprüche 1 bis 4, dadurch gekennzeichnet, daß die an den Stützflanschen vorgesehenen Führungselemente aus Kugelrollen-Einsätzen (9) bestehen, welche gleichfalls strahlen- oder speichenförmig um das jeweilige Stützflanschzentrum herum verteilt angeordnet und am Stützflansch befestigt sind.

6. Rohrmanipulator nach Anspruch 5, dadurch gekennzeichnet, daß je zwei Kugelrollen-Einsätze (9) spiegelsymmetrisch und tangential benachbart zu einer Klemmkolben-Zylinder-Anordnung (10) am jeweiligen Stützflansch (f) angeordnet sind.

7. Rohrmanipulator nach einem der Ansprüche 1 bis 4, dadurch gekennzeichnet, daß sich Steuerelemente (Ventile, Schalter) (M5/2, PE, $\Delta$P) für das zweigliedrige Schreitwerk an einem Tragkörper (m31) befinden, der an seinen beiden Enden mit je einem Kardangelenk (22, 26; 23, 26) versehen ist und als Zwischenglied (m3) den vorderen Schreitkörper mit dem hinteren Schreitkörper gelenkig verbindet.

8. Rohrmanipulator nach Anspruch 2, bei dem der hintere Schreitkörper als Antriebsmittel einen Schreitzylinder mit einem darin längsverschieblich gelagerten, zweiseitig beaufschlagbaren Schreitkolben aufweist, dadurch gekennzeichnet, daß der Schreitzylinder von dem Flanschkörper (C1, C14) gebildet wird, wobei dieser Flanschkörper aus einem mit dem einen Stützflansch (f2) verbundenen, den Schreitkolben (C2) führenden Doppelflanschteil (C14) und aus einem den eigentlichen Schreitzylinder bildenden und mit dem anderen Stützflansch (f1) verbundenen Zylinder besteht und die Schalter und Ventile (MV5/2, $\Delta$P/PE) für den Druckmittelantrieb des Schreitkolbens (C2) trägt.

9. Rohrmanipulator nach Anspruch 2, dadurch gekennzeichnet, daß die Antriebsmittel aus einem im Inneren des Flanschkörpers (47) angeordneten Elektromagnetantrieb (45) bestehen, der eine in beiden Kraftrichtungen wirkende Magnetspulenanordnung (45.1) und den zugehörigen Magnetanker (45.2) aufweist, wobei der Magnetanker über eine Kupplungsstange (46) mit mindestens einer kardanartigen Gelenkstelle (g1) mit dem vorderen Schreitkörper (m2) gekuppelt ist.

10. Rohrmanipulator nach Anspruch 2, dadurch gekennzeichnet, daß die Antriebsmittel aus einem Spindel-Wandermutter-Antrieb (51) mit einer in den beiden Stützflanschen (f1, f2) gelagerten und von dem Flanschkörper (58) umgebenen, in beiden Drehrichtungen motorisch antreibbaren Spindel (52) und einer am freien Ende der Spindel undrehbar gelagerten und mit dem vorderen Schreitkörper (m2) fest verbundenen Wandermutter (53) besteht, daß die Spindel durch mindestens eine kardanartige Gelenkverbindung (g1, g2) in mindestens zwei gelenkig miteinander verbundene Abschnitte (52.1, 52.2) unterteilt ist und daß die beiden Schreitkörper (m1, m2) über ein an ihren Stützflanschen (f1, f4) befestigtes und die kardanartige Gelenkverbindung umgebendes Wellrohr (54) verdrehungssicher miteinander gekoppelt sind.

11. Rohrmanipulator nach Anspruch 3 mit einem als Schleifvorrichtung ausgebildeten Manipulatorkopf, dadurch gekennzeichnet, daß der Lager- und Antriebskörper (32.1) der Schleifscheibe (32) um eine rohrachsparallele Achse (33) derart verstellbar zwischen den beiden Stützflanschen (f3, f4) gelagert ist, daß die Schleifscheibenebene (320) mit der in den jeweiligen Schleifscheiben-Berührungspunkt (32.2) verlagerten Rohrwand-Tangente (34) einen spitzen Anstellwinkel ($\gamma$) bildet.

12. Rohrmanipulator nach Anspruch 11, dadurch gekennzeichnet, daß der portalartig ausgebildete Lager- und Antriebskörper (32.1) um eine rohrquere Pendelachse (330) derart schwenkbar gelagert ist, daß er mit seinem Führungskörper (9) entsprechend der Rohrinnenkontur andrückbar ist und daß zur Andrückung ein die rohrquere Pendelachse in Richtung auf die Rohrwand verstellender Stellzylinder (34) vorgesehen ist.

11

13. Rohrmanipulator nach einem der Ansprüche 1 bis 3 mit einem als Schweißvorrichtung ausgebildeten Manipulatorkopf, dadurch gekennzeichnet, daß die Schweißvorrichtung auf einem am Stützflansch (f4) drehbar gelagerten Drehteller (42) angeordnet ist und daß der Lager- und Antriebskörper (40) für die Schweißelektrode (39) und den Schweißdraht auf diesem Drehteller an einer rohr-achsparallelen Pendelachse (41) gelagert ist.

## Claims

1. A self-drive manipulator for the remote-controlled transport of a tool and/or a test device through the interior of a pipe or a pipeline, consisting of a two-membered advancing mechanism having a front and a rear advancing body (m1, m2), a Cardan articulation (m3) which flexibly connects the two advancing bodies, driving means (C) for movement along the pipe axis of the one advancing body relative to the other advancing body, and a holder arranged on the front advancing body (m2) for a manipulator head (K1) which carries the tool (32) and/or the test device,

— wherein at its two ends the one advancing body (m1) has in each case, a respective supporting member (f1, f2) which supports guide elements (9) which are distributed at the periphery and serve for the rolling movement of the manipulator, and the other advancing body (m2) has at least one similar supporting member (f4),
— wherein at the outer periphery oif each advancing body (m1, m2), there are arranged radially retractable clamping devices (A, B, D, E),
— wherein the driving means (C) is assigned to the one advancing body (m1) and has a part (C2) which is movable in the axial direction of the pipe and is connected to the other advancing body (m2),
— and wherein supply lines (3) are led to the rear advancing body (m1),

characterised in

a)  that the supporting members of the advancing body are designed as supporting flanges (f1, f2, f3, f4) which in addition to the guide elements (9) also carry the clamping devices (A, B, C, D) which project over the contour of the supporting flanges,
b)  that in the case of the advancing body (m1) which is provided with two supporting flanges (f1, f2), the two supporting flanges are rigidly connected to one another,
c)  that the clamping devices consist of clamping piston-cylinder arrangements (10) which con be acted upon on both sides, which are arranged around the centre of the respective supporting flange in the form of rays or spokes and which are secured to said flange, and whose piston rods (10.2) which project outwards through a cylinder end face (10.11), have spherical clamping surface (10.22),
d)  and that the advancing body (m1) which houses the driving means (C) forms the rear advancing body, the supply lines (3.1) being led to this advancing body in the form of a flexible cable (3) and the manipulator head (K1) resting against a supporting flange (f4) of the front advancing body (m2).

2. A pipe manipulator as claimed in Claim 1, characterised in that the rear advancing body (m1) which houses the driving means, is provided with the two supporting flanges (f1, f2), which are connected to one another by means of a flange body.

3. A pipe manipulator as claimed in Claim 1 or Claim 2, characterised in that the front advancing body (m2) has two supporting flanges (f3, f4) between which the manipulator head (K1, K3) is arranged.

4. A pipe manipulator as claimed in one of Claim 1 to 3, characterised in that the supporting flange (f1 — f4) is fitted to the inner cross-section of the pipe with a defined annular clearance.

5. A pipe manipulator as claimed in one of Claims 1 to 4, characterised in that the guide elements provided on the supporting flanges consist of ball roller inserts (9) which are likewise distributed around the respective centre of the supporting flange in the form of rays or spokes and which are secured to the supporting flange.

6. A pipe manipulator as claimed in Claim 5, characterised in that two ball roller inserts (9) are arranged on the respective supporting flange (f) so as to be mirror-symmetrically and tangentially adjacent to a clamping piston-cylinder arrangement (10).

7. A pipe manipulator as claimed in one of Claims 1 to 4, characterised in that control elements (valves, switches) (M5/2, PE, $\Delta$P) for the two-membered advancing mechanism are arranged on a carrier body (m31), which at its two ends is provided with a respective Cardan joint (22, 26; 23, 26) and as an intermediate member (m3) flexibly connects the front advancing body to the rear advancing body.

8. A pipe manipulator as claimed in Claim 2, wherein the rear advancing body has an advancing cylinder as driving means with an advancing piston which is mounted therein so as to be longitudinally displaceable and which can be acted upon on both sides, characterised in that the advancing cylinder is formed by the flange body (C1, C4), and the flange body consists of a double flange part (C14), which is connected to the one supporting flange (f2) and guides the advancing piston (C2), and of a cylinder which forms the actual advancing cylinder and is connected to the other supporting flange (f1), and supports the switches and valves (MV5/2, $\Delta$P/PE) for the pressure medium drive of the advancing piston (C2).

9. A pipe manipulator as claimed in Claim 2, characterised in that the driving means consist of an electro-magnetic drive (45) which is arranged inside the flange body (47) and which has a magnetic coil arrangement (45.1) which operates in both directions of force and has an assigned magnetic armature (45.2), the magnetic armature being coupled to the front advancing bocy (m2) by means of a coupling rod (46) with at least one Cardan joint (g1).

10. A pipe manipulator as claimed in Claim 2, characterised in that the driving means consist of a travelling spindle nut drive (51) having a spindle (52) which is mounted in the two supporting flanges (f1, f2) and is surrounded by the flange body (58) and which can be motor-driven in both rotational directions, and a travelling nut (53) which is non-rotatably mounted at the free end of the spindle and fixedly connected to the front advancing body (m2);
that the spindle is divided into at least two articulated sections (52.1, 52.2) by means of at least one Cardan joint connection (g1, g2);
and that the two advancing bodies (m1, m2) are coupled to one another with torsional rigidity by means of a corrugated tube (54) which is secured to the supporting flanges (f1, f4) of said advancing bodies and surrounds the Cardan joints connection.

11. A pipe manipulator as claimed in Claim 3 having a manipulator head which is constructed as a grinding device, characterised in that the support and driving body (32.1) of the grinding disc (32) is mounted between the two supporting flanges (f3, f4) so as to be adjustable about an axis (33), which is parallel to the pipe axis, in such manner that the plane of the grinding disc (320) and the tangent to the pipe wall (34), displaced into the respective contact point (32.2) of the grinding disc, forms an acute adjustment angle ($\gamma$).

12. A pipe manipulator as claimed in Claim 11, characterised in that the gate-shaped support and driving body (32.1) is supported for pivotal movement about a pivot axis (330) transverse to the pipe, in such manner that it can be pressed onwards by means of its guide body (9) in accordance with the internal contour of the pipe; and that for the onwards pressing operation, there is provided an adjusting cylinder (34) which adjusts the direction of the pivot axis transverse to the pipe on the pipe wall.

13. A pipe manipulator as claimed in one of Claims 1 to 3 with a manipulator head which is designed as a welding device, characterised in that the welding device is arranged on a rotary plate (42) which is rotatably mounted on the supporting flange (f4); and that the support and driving body (40) for the welding electrode (39) and the welding wire is mounted on a pivot axis (14) on said rotary plate, which is parallel to the pipe axis.

**Revendications**

1. Manipulateur automobile servant à réaliser le transport, commandé à distance, d'un outil et/ou d'un appareil de contrôle à l'intérieur d'un tube ou d'une conduite tubulaire, et qui est constitué par un mécanisme de déplacement en deux éléments, comportant un organe avant de déplacement et un organe arrière de déplacement (m1, m2), un articulation à la cardan (m3) reliant entre eux de façon articulée les deux organes de déplacement, des moyens d'entraînement (C) servant à faire avancer, suivant l'axe du tube, un organe de déplacement par rapport à l'autre organe de déplacement, et un support, prévu sur l'organe avant de déplacement (m2) et prévu pour le tête (K1) du manipulateur portant l'outil (32) et/ou l'appareil de contrôle,

—  dans lequel un organe de déplacement (m1) comporte sur ses deux extrémités des éléments d'appui respectifs (f1, f2) portant, sur leur pourtour, des organes de guidage (9) pour avancer le manipulateur en roulant, et l'autre organe de déplacement (m2) comporte au moins un élément d'appui identique (f4),
—  dans lequel il est prévu, sur le pourtour extérieur de chaque organe de déplacement (m1, m2), des dispositifs de serrage (A, B, D, E) pouvant être ressortis et rentrés radialement,
—  dans lequel les moyens d'entraînement (C) sont associés à un organe de déplacement (m1) et comportent une partie (C2) déplaçable suivant la direction axiale du tube et reliée à l'autre organe de déplacement (m2),
—  et dans lequel des conduites d'alimentation (3) sont disposées sur l'organe arrière de déplacement (m1),

caractérisé par le fait que

a) les éléments d'appui des organes de déplacement sont réalisés sous la forme de brides d'appui (f1, f2, f3, f4), qui portent également, en-dehors des organes de guidage (9), les dispositifs de serrage (A, B, E, D), qui font saillike sur le contour des brides d'appui,

b) que dans le cas de l'organe de déplacement (m1) muni de deux brides d'appui (f1, f2), les deux brides d'appui sont reliées rigidement entre elles,

c) que les dispositifs de serrage sont constitués par des dispositifs à cylindre et piston de serrage (10), qui peuvent être chargés sur leurs deux faces, sont disposés sous une forme rayonnante ou de rayons autour du centre de la bride d'appui respective et sont fixés sur cette bride, et dont des tiges de piston (10.2), qui font saillie vers l'extérieur à travers une paroi frontale (10.11) du cylindre, comportent des surfaces de blocage (10.2) de forme bombée,

d) et que l'organe de déplacement (m1), logeant les moyens d'entraînement (C), forme l'organe arrière de déplacement, les conduites d'alimentation (3.1) s'étendant sous la forme d'un cordon flexible (3) le long de cet organe de déplacement, et que la tête (K) du manipulateur est protée par une bride d'appui (f4) de l'organe avant de déplacement (m2).

2. Manipulateur pour tubes suivant la revendication 1, caractérisé par le fait que l'organe arrière de déplacement (m1), qui loge les moyens d'entraînement, est muni des deux brides d'appui (f1, f2), qui sont reliées entre elles par l'intermédiaire d'un élément de bride.

3. Manipulateur pour tubes suivant la revendication 1 ou 2, caractérisé par le fait que l'organe avant de marche (m2) comporte deux brides d'appui (f3, f4), entre lesquelles est disposée la tête (K1, K3) ou manipulateur.

4. Manipulateur pour tubes suivant les revendications 1 à 3, caractérisé par le fait que les brides d'appui (f1 — f4) sont adaptées, avec une fente annulaire définie, à la section transversale intérieure du tube.

5. Manipulateur pour tubes suivant l'une des revendications 1 à 4, caractérisé par le fait que les organes de guidage prévus sur les brides d'appui sont constitués par des inserts (9) en forme de roulettes qui sont disposés en étant répartis également avec une forme rayonnante ou de rayons autour du centre respectif de la bride d'appui et sont fixés sur cette bride.

6. Manipulateur pour tubes suivant la revendication 5, caractérisé par le fait que deux inserts en forme de roulettes (9) sont disposés respectivement dans des positions symétriques et tangentiellement à un dispositif à cylindre et piston de serrage (10), sur les brides d'appui respectives (f).

7. Manipulateur pour tubes suivant l'une des revendications 1 à 4, caractérisé par le fait que des organes de commande (valves, commutateurs) (M5/2, PE, $\Delta$P) pour le mécanisme de déplacement à deux éléments sont situés sur un support (m31), qui comporte à ses deux extrémités, des articulations respectives à la cardan (22, 26; 23, 26) et qui, en tant qu'organe intermédiaire (m3), relie de façon articulée l'organe avant de déplacement et l'organe arrière de déplacement.

8. Manipulateur pour tubes suivant la revendication 2, dans lequel l'organe arrière de déplacement comporte, comme moyens d'entraînement, un cylindre de déplacement muni d'un piston de déplacement monté de façon à pouvoir avoir un déplacement longitudinal et chargé sur ses deux faces, caractérisé par le fait que le cylindre de déplacement est constitué par l'élément de bride (C1, C14), cet élément de bride étant constitué par un élément de bride double (C14), qui est relié à une bride d'appui (f2) et guide le piston de déplacement (C2), et par un cylindre constituant le cylindre de déplacement proprement dit et relié à l'autre bride d'appui (f1), et porte les commutateurs et les valves (MV5/2, $\Delta$P/PE) pour l'entraînement du piston de déplacement (C2) par des moyens de pression.

9. Manipulateur pour tubes suivant la revendication 2, caractérisé par le fait que les moyens d'entraînement sont constitués par un dispositif d'entraînement à électro-aimant (45) disposé à l'intérieur du corps de bride (47) et qui possède un dispositif de bobines d'aimant (45.1) agissant suivant les deux directions de force et des armatures d'aimant associées (45.2), l'armature de l'aimant étant accouplée par l'intermédiaire d'une barre d'accouplement (46) par au moins un point d'articulation à la cardan (g1) à l'organe avant de déplacement (m2).

10. Manipulateur pour tubes selon la revendication 2, caractérisé par le fait que les moyens d'entraînement sont constitués par un dispositif d'entraînement (51) à broche et écrou mobile, comportant une broche (52) soutenue dans les deux brides d'appui (f1, f2), entourée par l'élément de bride (58) et pouvant être entraîînée par un moteur dans les deux sens de rotation, et par un écrou mobile (53) relié rigidement à l'organe avant de déplacement (m2), que la broche est subdivisée par au moins une liaison articulée à la cardan (g1, g2) en au moins deux sections (52.1, 52.2) reliées entre elles par articulation, et que les deux organes de déplacement (m1, m2) sont accouplés entre eux avec blocage de rotaion par l'intermédiaire d'un arbre ondulé (54) fixé à ces brides d'appui (f1, f4) et entourant la liaison articulée à la cardan.

11. Manipulateur pour tubes suivant la revendication 3, comportant une tête réalisée sous la forme d'un dispositif coulissant, caractérisé par le fait que le corps formant support et dispositif d'entraînement (32.1) de la meule (32) est monté de façon à pouvoir être déplacé autour d'un axe (33), parallèle à l'axe du tube, entre les deux brides d'appui (f3, f4) de telle sorte que le plan (320) de la meule forme l'angle aigu d'inclinaison ($\gamma$) avec la tangente (34) de la paroi tubulaire, tracée au point respectif (32.2) de contact de la meule.

12. Manipulateur pour tubes suivant la revendication 11, caractérisé par le fait que le corps formant support et dispositif d'entraînement (32.1), réalisé sous la forme d'un portique est monté de façon à pouvoir pivoter autour d'un axe d'oscillation (330), transversal par rapport au tube de telle sorte qu'il peut être comprimé par son organe de guidage (9) conformément au contour intérieur du tube et que pour exercer la compression il est prévu un vérin de réglage (34) déplaçant l'axe d'oscillation, transversal par rapport au tube, en directon de la paroi du tube.

13. Manipulateur pour tubes suivant l'une des revendications 2 à 3, comportant une tête réalisée sous la forme d'un dispositif soudé, caractérisé par le fait que le dispositif soudé est disposé sur un plateau rotatif (42) monté de façon à pouvoir tourner sur la bride d'appui (f4), et que le corps formant support et dispositif d'entraînement (40) pour l'électrode de soudage (39) et pour le fil de soudage est monté sur ce plateau rotatif, sur un axe d'oscillation (41) parallèle à l'axe du tube.

FIG 2

FIG 1

0 061 078

ΔP/PE

(+) _m2_

(Ze) D

10

MV5/2 (+)

Schleifkopf

C (−)

(+) _m1_

10 (Ze)

A

ΔP/PE

ΔP/PE

6 bar

MV5/2 (+)

SS

Schreitkörper

ΔP/PE

MV5/2

MV5/2 (−)

MV 5/2

ΔP/PE (Sp) E

ΔP/PE

10

ΔP/PE ΔP/PE

10

(+)

10 B

(Sp)

ΔP/PE

(+) ΔP/PE

**FIG 3**

FIG 4

FIG 5

FIG 6

FIG 7

FIG 8

FIG 10

FIG 9

f3 36 33 34 37 32.3 9 f4

36.1 9 M mm m3 f1 m1 f2

35

9 9 K1 32.1 32 9 9
330 m2

mm'

0 061 078

FIG 11

FIG 12

FIG 13

FIG 14

FIG 17

FIG 18

FIG 15

Ansicht A-B

FIG 16